# EUROPÄISCHE PATENTSCHRIFT

(11) **EP 0 393 242 B1**
(45) Veröffentlichungstag und Bekanntmachung des Hinweises auf die Patenterteilung: **11.08.1993**
(21) Anmeldenummer: 89118977.1
(22) Anmeldetag: 12.10.1989
(51) Int. Cl.: B23Q 5/58, B23K 26/00

(54) **Vorrichtung zur automatischen Lageeinstellung eines Laserschneidkopfes in einer Rohrtrennmaschine**
Device for automatically positioning a laser cutting nozzle of a pipe separating machine
Dispositif de positionnement automatique d'une tête de découpe laser dans un séparateur de tuyau

(30) Priorität: 20.04.1989 IT 2092789 U
(43) Veröffentlichungstag der Anmeldung: 24.10.1990
(73) Patentinhaber: SALA S.p.A., I-38056 Levico (IT)
(72) Erfinder: Mosca, Claudio, I-38056 Levico (IT)
(74) Vertreter: Mayer, Hans Benno, Dipl.-Ing.

(56) Entgegenhaltungen:
- EP-A- 0 163 207
- EP-A- 0 282 454
- DE-U- 8 900 556
- US-A- 4 317 021
- US-A- 4 429 211
- US-A- 4 636 608
- US-A- 4 806 726
- PATENT ABSTRACTS OF JAPAN, Band 10, Nr. 204 (M-499)[2260], 17. Juli 1986;& JP-A-61 46 389 (TOYOTA MOTOR) 06-03-1986
- PATENT ABSTRACTS OF JAPAN, Band 10, Nr. 83 (M-466)[2140], 2. April 1986; & JP-A-60 223 692 (FUJISWA) 08-11-19851986

## Beschreibung

Die Erfindung betrifft eine Vorrichtung zur automatischen Lageeinstellung eines Lasertrennkopfes gegenueber einem Werkstueck, z. B. einem Rohrstueck, das mittles eines Laserstrahles zu trennen ist.

Aus der italienischen Gebrauchsmusteranmeldung 22018 B/88 der Anmelderin ist eine Vorrichtung bekannt geworden, die zum genauen Spannen eines rohrfoermigen Werkstueckes und fuer dessen Drehantrieb waehrend des Schneidvorganges durch den Laserstrahl vorgesehen ist. Der Inhalt dieser Voranmeldung sowie der gebauten Maschine ist fuer das Verstaendnis der im folgenden beschriebenen Vorrichtung zu beruecksichtigen.

Es konnte festgestellt werden, dass es fuer einen genauen Schneidvorgang mittels eines Laserstrahles unbedingt erforderlich ist, dass der Brennpunkt des Laserstrahles mit genau gleichbleibendem Abstand gegenueber der Oberflaeche des Werkstueckes, z.B. des zu trennenden Rohres, zu liegen kommt. Aus diesem Grund ist der Kopf mit der Linsenanordnung fuer den Laserstrahl von Fall zu Fall genau auf den sich aendernden Durchmesser des Rohres einzustellen.

Bei der Vorrichtung gemaess der italienischen Gebrauchmusteranmeldung 22018 B/88 wurde dieser Einstellvorgang noch von Hand vorgenommen, und zwar jedesmal dann, wenn sich der Durchmesser des zu schneidenden Rohres aenderte. Es ist naheliegend, dass dieser von Hand durchzufuehrende Einstellvorgang, der eine gewisse Geschicklichkeit des Bedienungsmannes voraussetzt, auch einen Verlust wertvoller Maschinenzeit mit sich bringt, besonders dann, wenn unterschiedliche Rohrdurchmesser zu bearbeiten sind. Diese Tatsache wirkt sich bei der bekannten Vorrichtung negativ auf den gesamten Leistungsgrad der Laserschneidmaschine aus. Weiter wurde festgestellt, dass eine unrichtige Einstellung des Laserkopfes zu schweren Schaeden an der Werkzeugmaschine fuehren kann. Ist z.B. die Einrichtung fuer die Einstellung des Brennkopfes zu weit nach unten verfahren, das heisst sehr nahe gegenueber der Rohrwand angeordnet, so besteht die Gefahr, dass beim Vorschub des Rohrstueckes, das mit erheblicher Geschwindigkeit verfahren wird, ein Anstossen an den empfindlichen Laserschneidkopf entritt.

Um solche gefaehrlichen Zusammenstoesse bei der automatischen Bearbeitung von Rohrstuecken auszuschliessen, ist es notwendig, am Ende eines jeden Schneidvorganges den Schneidkopf anzuheben, um zu ermoeglichen, dass das vorwaertsbewegte Rohrstueck eine ungehinderte Bewegung durchfuehren kann. Die Hubbewegung wird in der bekannten Maschine ueber einen pneumatischen Zylinder bewerkstelligt und es ist naheliegend, dass die Steuerung und der Hub dieses Pneumatikzylinders eine gewisse Zeit in Anspruch nimmt, Verzoegerung, die den weiteren Totzeiten der Maschine zu addieren ist, was zu einer weiteren Verlangsamung des Fertigungszyklusses fuehrt.

Es ist Aufgabe der vorstehenden Erfindung, eine Vorrichtung zu schaffen, die es ermoeglicht, eine genaue Lageinstellung sowie ein gesteuertes Anheben und Absenken des Laserkopfes automatisoch und genau in direktem Synchronismus mit der Oeffnungsbewegung bzw. der Schliessbewegung der Spannbacken durchzufuehren.

Erfindungsgemaess wird diese Aufgabe dadurch geloest, dass mit dem Antriebskolben fuer die Spannbacken zum Spannen des Rohrstueckes eine Antriebsstange wirkverbunden ist, die gelenkig mit einer Zahnstange verbunden ist, die mit einem Zahnrad kaemmt, dass am Maschinengestell gelagert ist, dass mit diesem Zahnrad eine weitere senkrecht angeordnete Zahnstange in Wirkverbindung steht, die mit dem Koerper eines verschiebbaren Laserkopfes verbunden ist, der eine Linse zum Einstellen des Brennpunktes aufnimmt.

Mit einer Vorrichtung dieser Art wird es moeglich, eine Hebevorrichtung und Senkvorrichtung sowie eine automatische Einstellvorrichtung fuer das bewegliche Kopfteil, das eine Linse zur Festlegung des Brennpunktes aufweist, zu schaffen. Waehrend des Oeffnungsvorganges der Spannbacken wird der Laserkopf automatisch angehoben, bei Schliessen der Spannbacken wird der Laserkopf automatisch abgesenkt und genau in seiner Lage gegenueber der Rohrwand eingestellt.

Auch bei sogenannter "bunter" Bearbeitung, das heisst beim Trennen von Rohren mit unterschiedlichen Durchmessern, erfolgt die Lageeinstellung des Laserkopfes automatisch und mit Genauigkeit gegenueber dem Aussenmantel des Rohres, da der Schliesshub der Spannbacken automatisch durch einen voreingestellten Hub eines den Backen zugeordneten Hydraulikkolbens erfolgt.

Der Erfindungsgegenstand wird nun genauer anhand eines Ausfuehrungsbeispieles beschreiben und in der beigefuegten Zeichnung dargestellt.

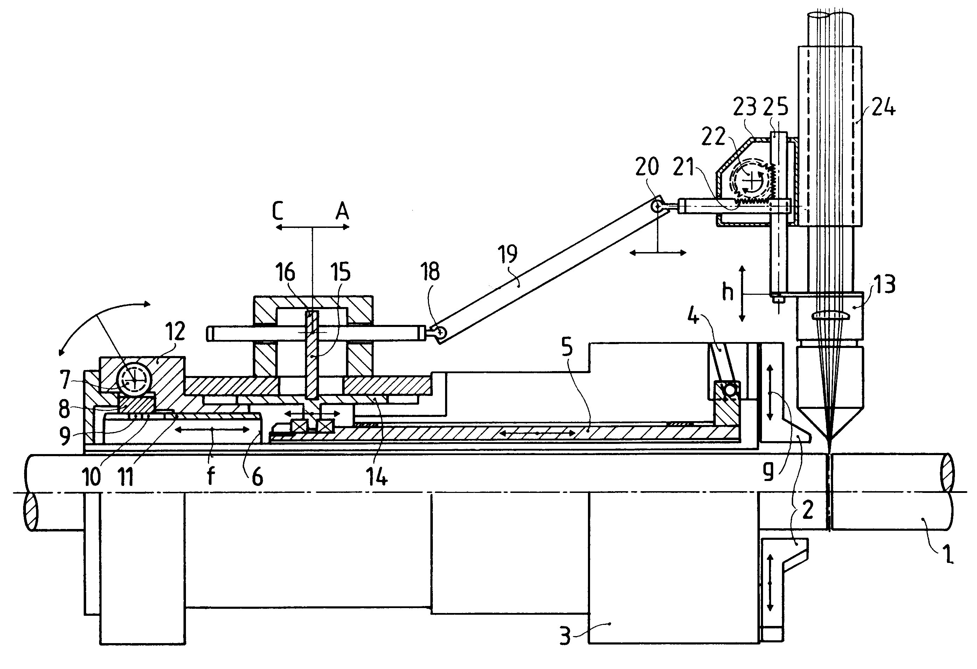

In der Zeichnung ist schematisch die Antriebseinrichtung der Spannbacken zusammen mit der automatischen Vorrichtung zum Einstellen, Anheben und Absenken des Laserkopfes dargestellt.

Wie der Zeichnung zu entnehmen ist, wird das Rohr 1 waehrend des Schneidvorganges ueber Spannbacken 2 festgespannt. Die Spannbacken 2 sind Bestandteil eines automatisch zentrierenden Spannfutters 3, mit dem das Rohr 1 auch in Drehbewegung versetzt wird.

Jede Spannbacke 2 weist in bekannter Weise im Inneren der Vorrichtung 3 geneigte Flaechen 4 auf, mit denen die Zapfen eines huelsenfoermigen Bauteiles 5 in Wirkverbindung stehen. Das huelsenfoermige Bauteil 5 ist in Axialrichtung des Rohres 1 verschiebbar angeordnet und wird in seiner Endlage durch einen rohrfoermigen Anschlag 6 festgelegt. Der Anschlag 6 kann unter Zuhilfenahme einer Gewindespindel 7, die z.B. ueber ein Handrad angetrieben wird, in seiner Lage eingestellt werden. Die Gewindespindel 7 wirkt auf ein Zahnrad 8 ein, das vorspringende Zapfen 9 aufweist, die mit Laengsnuten 10 des rohrfoermigen Anschlages 6 in Wirkverbindung stehen. Der rohrfoermige Anschlag 6 ist ueber ein Gewinde 11 in den Lagerkoerper 12 eingeschraubt. Durch Betaetigen der Gewindespindel 7 wird eine Drehbewegung des Zahnrades 8 hervorgerufen, dadurch erfolgt eine Laengsverschiebung des rohrfoermigen Anschlages 6 in Richtung des Pfeiles f. Somit wird es moeglich, die Schliessbewegung des huelsenfoermigen Bauteiles 5 und somit die Schliessbewegung (g) der Spannbacken 2 entsprechend dem Durchmesser des Rohres 1 festzulegen.

Da das Zahnrad mit dem rohrfoermigen Anschlag 6 ueber die Laengsnuten 10 und Zapfen 9 des Zahnrades wirkverbunden ist, wird durch die Drehbewegung des Zahnrades 8 eine Axialverschiebung des Anschlages in Richtung des Pfeiles (f) vorgenommen, wodurch eine freie Lagefestlegung in axialer Richtung moeglich wird.

Die bisher beschriebenen Bauteile sind bereits aus einer Vorrichtung bekannt, die von der Anmelderin hergestellt und vertrieben wird und in der italienischen Gebrauchsmusteranmeldung 22018 B/88 beschrieben ist. Sie beduerfen deshalb keiner weiteren Beschreibung.

Um eine automatische Lageeinstellung des Kopfes 13 zur Festlegung des Brennpunktes gegenueber dem Rohrmantel 1 vornehmen zu koennen und gleichzeitig eine Absenkbewegung sowie eine Anhebebewegung des Kopfes 13 einzuleiten (Pfeil h) und dies synchron zur Bewegung des Kolbens 14 vorzunehmen, der auf das huelsenfoermige Bauteil 5 einwirkt, wurde gemaess der Erfindung vorgeschlagen, das huelsenfoermige Bauteil 5 ueber einen von diesen abstehenden Arm 15 mit einem Ende 16 einer Antriebsstange 17 zu verbinden.

Das andere Ende der Antriebsstange 17, das auf den Laserkopf 13 zugerichtet ist, weist ein Gelenk 18 auf, mit dem eine Antriebsstange 19 ueber eine Gelenkverbindung 20 mit einer Zahnstange 21 verbunden ist. Die Zahnstange 21 ist in vorteilhafter Weise in horizontaler Lage angeordnet. Die Zahnstange 21 kaemmt mit einem Zahnrad 22, das am oberen Teil des Gestells 23 der Maschine gelagert ist. Dieses Gestell nimmt ein Gehaeuse 24 auf, in dem der Kopf 13 fuer die Festlegung des Brennpunktes angeordnet ist. Der Kopf 13 kann auf und ab verfahren werden (Pfeil h).

Das Zahnrad 23 steht mit einer weiteren Zahnstange 25 in Wirkverbindung, dessen unteres Ende mit dem Kopf 13 zur Festlegung des Brennpunktes verbunden ist. Der Kopf 13 kann nach oben und nach unten verfahren werden.

Die Arbeitsweise der Einstellvorrichtung fuer den Kopf 13 zur Festlegung des Brennpunktes, der in seiner Lage gegenueber dem Rohrmantel 1 einzustellen ist, ist folgende: Sobald der Kolben 14 von einer Hydraulikfluessigkeit derartig beeinflusst wird, dass ein Verfahren des Kolbens in Richtung (C) erfolgt, Bewegung die einem Schliess- oder Spannvorgang der Backen 2, die das Rohrstueck 1 umgreifen, entspricht, wird die Ruecklaufbewegung auch auf die Zahnstange 21 uebertragen, die das Zahnrad 22 im Uhrzeigersinn antreibt. Dadurch wird die Zahnstange 25 nach unten verfahren und der Laserkopf 13 wird genau mit dem gewuenschten Abstand gegenueber dem Mantel des Rohres 1 positioniert. Dieser Einstellvorgang erfolgt automatisch und unabhaengig vom Durchmesser des Rohres 1, das ja zwischen den Backen 2 gespannt wird. Die Hubbewegung des Kolbens 14 in Schliessrichtung wird durch den Anschlag 6, der entsprechend dem Durchmesser des Rohres 1 eingestellt ist, begrenzt.

Wenn der Rohrkolben 14 in Richtung (A) verschoben wird, das heisst bei Durchfuehrung einer Oeffnungsbewegung der Backen 2, so wird ein Verschieben der Zahnstange 21, die nun auf das Zahnrad (22) im Gegenuhrzeigersinn einwirkt, hervorgerufen, und die Zahnstange 25 wird angehoben, was zu einem synchronisierten Anheben des Kopfes 3 fuehrt. Mit dieser Hubbewegung des Kopfes 13, die in Synchronismus zur Oeffnungsbewegung der Backen 2 erfolgt, wird die Bahn des vorgeschobenen Rohres freigegeben, somit wird die Gefahr einer Beschaedigung des empfindlichen Laserkopfes 13 vermieden, da der Kopf in eine Lage ueber dem Vorschubweg des sich bewegenden Rohres angehoben ist.

## Patentansprüche

1. Vorrichtung zur automatischen Lageeinstellung eines Laserschneidkopfes in einer Rohrtrennmaschine oder einer aehnlichen Einrichtung, die mit einer Spannvorrichtung zum Spannen und Drehen des rohrfoermigen Werkstueckes ausgeruestet ist, **dadurch gekennzeichnet**, dass mit einem Kolben (14) zum Antrieb des Spannbacken (2) des Rohres (1) eine Antriebsstange (19) wirkverbunden und gelenkig mit einer Zahnstange (21) verbunden ist, die mit einem Zahnrad (22) kaemmt, das am Gestell der Maschine gelagert ist, dass mit dem Zahnrad (22) eine weitere senkrecht angeordnete Zahnstange (25) kaemmt, die fest mit dem Koerper (13) eines verschiebbaren Laserkopfes (24) verbunden ist, der eine Linse zum Einstellen des Brennpunktes aufnimmt.

## Claims

1. Apparatus for automatically adjusting the position of a laser cutting head in a pipe cutting-off machine or similar device, which apparatus is equipped with a clamping device for clamping and turning the tubular workpiece, characterised in that a drive rod (19) is operatively connected to a piston (14) for driving the clamp jaws (2) for the pipe (1) and is pivotally connected to a toothed rack (21) meshing with a gear (22) mounted on the machine frame, and in that another, vertically disposed toothed rack (25) meshes with the gear (22) and is fixedly connected to the body (13) of a slidable laser head (24) which houses a lens for adjusting the focus.

## Revendications

1. Appareil destiné au réglage automatique du positionnement d'une tête laser de découpage dans une machine de découpe de tuyau ou dans une machine similaire, équipé d'un dispositif de fixation pour le serrage et le pivotement de la pièce tubulaire, caractérisé par une tringle de commande (19) reliée en fonctionnement à un piston (14) qui actionne les mâchoires de serrage (2) sur le tuyau (1) et reliée à pivotement à une crémaillère (21) qui s'engrène à un engrenage (22) monté sur la structure de la machine et par une deuxième crémaillère placée verticalement (25), qui s'engrène à l'engrenage (22) et fixée au corps (13) d'une tête laser coulissante (24) recevant la lentille qui permet de régler la mise au point.
